(19) Europäisches Patentamt
European Patent Office
Office européen des brevets

(11) EP 2 756 111 B1

(12) # FASCICULE DE BREVET EUROPEEN

(45) Date de publication et mention de la délivrance du brevet:
**07.03.2018 Bulletin 2018/10**

(21) Numéro de dépôt: **12767061.0**

(22) Date de dépôt: **11.09.2012**

(51) Int Cl.:
***C23F 11/02*** (2006.01)
***C23F 11/14*** (2006.01)
***C09K 8/54*** (2006.01)
***E21B 37/02*** (2006.01)
***C23F 11/04*** (2006.01)
***C10G 7/10*** (2006.01)
***C10G 75/02*** (2006.01)

(86) Numéro de dépôt international:
**PCT/FR2012/052024**

(87) Numéro de publication internationale:
**WO 2013/038100 (21.03.2013 Gazette 2013/12)**

(54) **INHIBITEURS DE CORROSION DE VOÛTE DE CONDUITES DE TRANSPORT DE BRUTS D'EXTRACTION D'HYDROCARBURES**

INHIBITOREN DER ÄUSSEREN KORROSION VON ROHRLEITUNGEN ZUM FÖRDERN VON AUS KOHLENWASSERSTOFFEN EXTRAHIERTEN ROHSTOFFEN

INHIBITORS OF TOP-OF-LINE CORROSION OF PIPELINES CONVEYING CRUDES FROM EXTRACTION OF HYDROCARBONS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.09.2011 FR 1158115**

(43) Date de publication de la demande:
**23.07.2014 Bulletin 2014/30**

(73) Titulaire: **ARKEMA FRANCE**
**92700 Colombes (FR)**

(72) Inventeurs:
- **POU, Tong Eak**
  **F-69540 Irigny (FR)**
- **BOITO, Stéphane**
  **F-69780 Mions (FR)**

(74) Mandataire: **Schaefer, Anne-Sophie et al**
**ARKEMA France**
**Département Propriété Industrielle**
**420, rue d'Estienne d'Orves**
**92705 Colombes Cedex (FR)**

(56) Documents cités:
**EP-A1- 0 134 365**
**EP-A1- 0 807 696**
**WO-A1-2006/032774**
**FR-A1- 2 475 578**
**FR-A1- 2 791 695**
**FR-A1- 2 875 506**
**GB-A- 2 084 982**
**US-A- 2 582 138**
**US-A- 4 490 275**
**US-A- 5 965 785**
**US-A1- 2005 051 462**
**US-A1- 2010 304 018**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 756 111 B1

## Description

La présente invention concerne le domaine de l'extraction des hydrocarbures, tels que pétrole et/ou gaz, et concerne plus particulièrement les problèmes de corrosion des conduites servant au transport desdits hydrocarbures.

Les hydrocarbures issus des gisements pétroliers comprennent le plus souvent des mélanges de pétrole brut et de gaz, avec des quantités plus ou moins importantes d'eau, formant une phase aqueuse dans laquelle des gaz acides, également présents dans les hydrocarbures, sont dissous au moins en partie, voire en totalité.

Sous l'effet des différences de pressions et de températures qui interviennent lors de la remontée des hydrocarbures des couches profondes souterraines jusqu'à la surface, l'eau présente dans lesdits hydrocarbures peut se condenser sur les parois internes des conduites, et principalement sur le fond des conduites (« Bottom of Line », ou « BoL » en langue anglaise) et sur la voûte des conduites (« Top of Line », ou « ToL » en langue anglaise).

Cette phase aqueuse acide entraîne une corrosion importante des conduites, dénommée « corrosion de fond » dans le fond des conduites (« Bottom of Line Corrosion », en langue anglaise) et « corrosion de voûte » ou « corrosion midi » sur les voûtes des conduites (« Top of Line Corrosion » ou « TLC », en langue anglaise).

La corrosion de voûte (TLC) est un phénomène important au niveau mondial dans l'industrie de l'extraction de pétrole brut et de gaz, et est particulièrement source de problèmes tant pour les gisements off-shore que pour les gisements on-shore (voir par exemple les travaux de M. Singer et coll. « Sour Top-of-the-Line Corrosion in the Presence of Acetic Acid », Corrosion 67, (2011), 085003 sqq., ou encore : http://corrosion.curtin.edu.au/research/topofline.cfm).

En effet, dans des conditions d'écoulement laminaire (ou stratifié) des fluides transportés, et lorsque les conditions de condensation sont réunies, on observe très souvent une corrosion interne localisée à la voûte des conduites des conduites horizontales. Cette corrosion est principalement due à l'eau de condensation sur la voûte des conduites, qui contient des gaz acides dissous, notamment hydrogène sulfuré ($H_2S$) et dioxyde de carbone ($CO_2$), mais aussi des acides organiques, par exemple acide acétique.

Plus précisément, dans les conduites multiphasiques de transport de pétrole et/ou de gaz humide à régime d'écoulement stratifié, vague ou vague-stratifié, la phase liquide s'écoule dans la partie inférieure de la conduite, tandis que la phase gazeuse s'écoule dans la partie supérieure de la conduite.

La phase gazeuse contient le plus souvent des gaz acides, tels que $CO_2$, $H_2S$, mais aussi et des gaz organiques acides, tel que acide acétique. La phase liquide quant à elle contient des hydrocarbures et une quantité non négligeable d'eau.

Pour protéger la paroi intérieure de la conduite contre la corrosion sous l'action des acides, il est courant d'injecter dans la conduite, dès la sortie du puits d'extraction, un inhibiteur de corrosion qui se mélange à la phase liquide. Cependant, lorsque le régime d'écoulement est stratifié, vague ou vague stratifié, seule la partie inférieure de la conduite qui est au contact de la phase liquide est efficacement protégée contre la corrosion.

Or, à l'heure actuelle, les températures d'extraction des hydrocarbures sont de plus en plus élevées, ce qui augmente grandement les risques de corrosion de voûte. En effet, sous l'action de la chaleur, l'eau contenue dans la phase liquide se transforme en vapeur d'eau, laquelle se condense sur la paroi intérieure de la voûte des conduites, qui est refroidie plus ou moins brutalement par l'air et l'eau froids extérieurs (notamment dans le cas des conduites sous-marines).

Cette eau de condensation présente une action corrosive très importante sur la voûte des conduites entraînant ainsi des dommages considérables sur lesdites conduites, allant de simples piqûres de corrosion, jusqu'à la destruction de la paroi et la fuite des hydrocarbures, ce qui est tout à fait inacceptable du point de vue de la préservation de l'environnement. De tels dégâts conduiraient à des pertes économiques considérables, en termes de dépollution, de pertes d'hydrocarbures, et également en termes de réparation des conduites endommagées.

De nombreuses conférences internationales, rassemblant les experts mondiaux en matière de corrosion des conduites d'hydrocarbures, sont régulièrement organisées, et reflètent l'importance du problème, notamment en raison du faible nombre de traitements chimiques proposés.

Il existe en effet déjà divers traitements chimiques, en batch et/ou en continu, en association ou non avec des traitements mécaniques, mais ceux-ci ne sont que peu ou pas du tout acceptés par les industriels, notamment en raison de leur efficacité peu satisfaisante. US 4 490 275 A1, US 5 965 785 A1, US 20050051462 A1 décrivent des compositions inhibitrices de corrosion contenant un mélange d'au moins deux amines, qui sont utilisées dans l'industrie pétrolière, pour protéger les conduits dans lesquelles circulent du pétrole brut humide et/ou du gaz humide.

US 2 582 138 A1 décrit une composition inhibitrice de corrosion contenant un mélange d'au moins deux amines, qui est utilisée dans des systèmes de produits de condensation des vapeurs où la corrosion est principalement provoquée par la présence du gaz carbonique et de l'oxygène.

Parmi les divers procédés et dispositifs proposés par le passé, pour empêcher, ou tout au moins limiter, la corrosion de voûte des conduites d'hydrocarbures, l'un desdits procédés consiste à envoyer dans la conduite un ou plusieurs racleurs, de section légèrement inférieure à la section intérieure de la conduite et espacés le long de la conduite, l'espace compris entre les racleurs étant rempli d'un bouchon de liquide inhibiteur. La demande de brevet FR 2 791 695

propose un autre système à râcles, en association avec des inhibiteurs de corrosion.

Parmi les traitements chimiques destinés à limiter la corrosion de type carbonique (due au $CO_2$) et/ou de type sulfhydrique (due à $H_2S$), on préconise l'emploi de nombreux inhibiteurs pour protéger efficacement le métal des conduites contre l'une et/ou l'autre de ces corrosions, par injection continue ou en batch dans le fluide corrosif, ledit fluide se distribuant ainsi de manière homogène tout au long desdites canalisations.

Toutefois, les conditions de traitement s'avèrent délicates voire difficiles, notamment dans le cas où deux voire trois des paramètres suivants sont réunis : i) un écoulement laminaire (ou stratifié) du fluide corrosif, un refroidissement de la canalisation par défaut d'isolement et une présence d'acide organique (en particulier acide acétique) dans la phase liquide.

Pour lutter contre ce type de corrosion de voûte (TLC), Y.M. Gunaltun et coll. (« Control of Top of line corrosion by chemical treatment », NACE Corrosion, (2001), n°01033) préconisent le traitement par batch, ou par injection, avec un inhibiteur persistant comprenant de la méthyldiéthanolamine (MDEA), afin de neutraliser l'acidité du milieu aqueux corrosif de la matrice de base (BLC).

Toutefois, il a été constaté que cette amine ne neutralise pas l'acidité du condensat (gouttelettes d'eau condensées) sur la voûte desdites conduites.

R. L. Martin, dans « Inhibition of Vapor Phase Corrosion in gas pipelines », NACE Corrosion, (1997), n°337, et N. N. Andreev et coll., dans « Volatile Inhibitors for CO2 Corrosion », NACE Corrosion, (1998), n°241, ont proposé des inhibiteurs de corrosion volatils (VCI : Volatile Corrosion Inhibitors) à très fort dosage (de l'ordre de quelques pourcents).

G. Schmitt et coll., dans « Inhibition of the top of line corrosion under stratified flow », NACE Corrosion, (2001), n° 01032, ont proposé d'utiliser un inhibiteur dit « grimpant » introduit dans le milieu corrosif comme un inhibiteur conventionnel. Par sa très faible tension superficielle, ce type d'inhibiteur grimperait tout au long de la paroi vers le sommet à l'intérieur de la conduite (position midi), inhibant ainsi la corrosion de voûte.

La demande internationale WO 2006/032774 décrit des inhibiteurs de corrosion de voûte de conduites d'hydrocarbures efficaces mais qui peuvent encore être améliorés.

Cependant, aucune de ces solutions connues n'apporte de solution convenable et réellement efficace au problème de corrosion de voûte des conduites d'hydrocarbures utilisées pour l'extraction des hydrocarbures, tels que pétrole et/ou gaz.

Il existe donc un réel besoin, concrétisé par les pressions constantes des industriels, pour de nouvelles solutions, de nouveaux traitements, permettant une lutte efficace contre la corrosion de voûte des conduites d'hydrocarbure.

La présente invention propose de résoudre le problème de la corrosion de voûte des conduites métalliques, notamment en acier, utilisées lors de l'extraction des hydrocarbures, et dans lesquelles circulent et/ou sont présents des fluides corrosifs (i. e. de l'eau contenant $CO_2$ et/ou $H_2S$ et/ou un ou plusieurs acides organiques, en général de l'acide acétique).

Ainsi, et selon un premier aspect, la présente invention concerne une composition inhibitrice de la corrosion de la partie supérieure (ou voûte) d'une conduite de transport d'hydrocarbures humides, c'est-à-dire d'hydrocarbures comportant une quantité plus ou moins importante d'eau.

La composition selon la présente invention comprend des composés spécifiques aminés qui, une fois introduits dans le milieu corrosif par injection, en continu, en batch ou en « squeeze », de préférence en continu, d'une part neutralisent l'acidité du milieu corrosif dans la phase où il y a écoulement laminaire et d'autre part passent en phase vapeur pour neutraliser l'acidité des gouttelettes d'eau qui sont condensées (condensat) sur la voûte interne supérieure de la conduite transportant les hydrocarbures extraits.

Plus précisément, la présente invention concerne une composition inhibitrice de corrosion de voûte, comprenant :

- de 1% à 30%, de préférence de 5% à 20%, d'au moins une première amine (Amine 1) de pression de vapeur supérieure ou égale à 10 mm de mercure (1,33 kPa), mesurée à 20°C ;
- de 5% à 50%, de préférence de 15% à 45%, d'au moins une deuxième amine (Amine 2) de pression de vapeur supérieure ou égale à 0,1 mm de mercure ($\geq$ 13,3 Pa) et strictement inférieure à 10 mm de mercure (< 1,33 kPa), mesurée à 20°C ;
- de 5% à 20%, d'au moins un additif soufré, choisi parmi les mercapto-acides et les mercapto-alcools ;
- de 0 à 60%, de préférence de 0 à 50% d'au moins une alcanolamine ; et
- éventuellement au moins un solvant, en quantité suffisante pour (q.s.p.) atteindre 100%.

Sauf indication contraire, tous les pourcentages (%) mentionnés dans la présente description sont des % en poids.

Selon un aspect de la présente invention, l'Amine 1 répond à la formule (1) suivante :

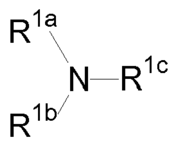

(1)

dans laquelle :

- $R^{1a}$ est choisi parmi les chaînes hydrocarbonées, linéaires ou ramifiées, saturées ou partiellement ou totalement insaturées, comprenant de 1 à 6 atomes de carbone, et éventuellement un ou plusieurs atomes d'oxygène dans la chaîne,
- $R^{1b}$ et $R^{1c}$, identiques ou différents, sont choisis, indépendamment l'un de l'autre, parmi l'atome d'hydrogène et les chaînes hydrocarbonées, linéaires, ramifiées ou cycliques, saturées ou partiellement ou totalement insaturées, comprenant de 1 à 6 atomes de carbone, et éventuellement un ou plusieurs hétéroatomes choisis parmi oxygène, azote et soufre, dans la chaîne.

L'Amine 1 est en règle générale considérée comme une amine « non grasse », et comprend avantageusement moins de 8 atomes de carbone au total. De préférence, dans l'Amine 1, $R^{1c}$ représente l'atome l'hydrogène, ou un groupement alkyle, de préférence choisi parmi méthyle, éthyle, n-propyle et *iso*-propyle.

D'une manière générale, toutes les amines représentées par la formule (1) ci-dessus peuvent convenir, pour autant toutefois que la pression de vapeur de ladite Amine 1 soit supérieure ou égale à 10 mm de mercure, mesurée à 20°C.

À titre d'exemples non limitatifs et illustratifs, l'Amine 1 peut être choisie parmi la MOPA (méthoxy-3-propylamine) et l'EDIPA (N,N-di-isopropyléthylamine) dont les pressions de vapeur respectives sont 11 mm de mercure et 12 mm de mercure.

La MOPA étant une amine facilement accessible et aisément disponible dans le commerce, celle-ci représente une Amine 1 tout à fait préférée pour des raisons économiques, d'autres amines présentant les mêmes caractéristiques peuvent également tout aussi bien convenir.

Selon un autre aspect de la présente invention, l'Amine 2 répond à la formule (2) suivante :

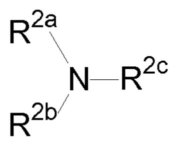

(2)

dans laquelle :

- $R^{2a}$ est choisi parmi les chaînes hydrocarbonées, linéaires, ramifiées ou cycliques, saturées ou partiellement ou totalement insaturées, comprenant de 1 à 12 atomes de carbone, et éventuellement un ou plusieurs hétéroatomes choisis parmi oxygène, azote et soufre, dans la chaîne.
- $R^{2b}$ et $R^{2c}$, identiques ou différents, sont choisis, indépendamment l'un de l'autre, parmi l'atome d'hydrogène et les chaînes hydrocarbonées, linéaires, ramifiées ou cycliques, saturées ou partiellement ou totalement insaturées, comprenant de 1 à 12 atomes de carbone.

L'Amine 2 est en règle générale considérée comme une amine « grasse », et comprend avantageusement au moins 8 atomes de carbone au total. De préférence, dans l'Amine 1, $R^{2c}$ représente l'atome l'hydrogène, ou un groupement alkyle, de préférence choisi parmi méthyle, éthyle, n-propyle et iso-propyle. On préfère en outre les Amines 2 dans lesquelles $R^{2b}$ représente une chaîne linéaire de formule $-[(CH_2)_2-NH]_n-H$, où n varie de 0 à 10, de préférence de 0 à 5, de préférence encore de 0 à 3.

D'une manière générale, toutes les amines représentées par la formule (2) ci-dessus peuvent convenir, pour autant toutefois que la pression de vapeur de ladite Amine 2 soit supérieure ou égale à 0,1 mm de mercure et strictement inférieure à 10 mm de mercure, à 20°C.

À titre d'exemples non limitatifs et illustratifs, l'Amine 2 peut être choisie parmi les alkylamines primaires comportant de 8 à 22 atomes de carbone, et plus particulièrement parmi les octylamines, les nonylamines, les décylamines, les undécylamines et les dodécylamines. La n-octylamine, dont la pression de vapeur est de 1 mm de mercure à 20°C,

représente une Amine 2 tout à fait préférée pour les compositions de la présente invention.

Les compositions selon la présente invention comprennent de 5% à 20% en poids d'au moins un additif soufré, choisi parmi les mercapto-acides et les mercapto-alcools.

Des exemples non limitatifs de tels additifs soufrés qui peuvent avantageusement être présents dans la composition de l'invention sont le mercapto-éthanol, le mercapto-propanol, l'acide thioglycolique, l'acide mercaptopropionique, pour ne citer que les plus aisément disponibles d'entre eux, l'acide thioglycolique étant tout particulièrement préféré.

Les compositions selon la présente invention peuvent également comprendre au moins une amine participant à la neutralisation de l'eau condensée. De telles amines sont choisies avantageusement parmi les amines liquides, solubles dans l'eau, et de préférence parmi les alcanolamines, telle que par exemple la mono-éthanolamine, la di-éthanolamine, la tri-éthanolamine, et autres, ainsi que les mélanges de deux ou plusieurs d'entre elles en toutes propotions.

Selon un autre aspect préféré, la composition selon la présente invention comprend également au moins un solvant, généralement choisi parmi l'eau, les solvants organiques hydrosolubles et les mélanges eau / solvant(s) organique(s) hydrosoluble(s).

Parmi les solvants organiques hydrosolubles, on peut citer les alcools et les éthers en particulier, parmi lesquels on préfère les alcools et les glycols, tel que par exemple, et de manière non limitative, ceux choisis parmi le méthanol, l'éthanol, le glycol, le monoéthylèneglycol (MEG), le diéthylèneglycol (DEG), le triéthylèneglycol (TEG), le 2-butoxyéthanol, et les mélanges de deux ou plusieurs d'entre eux en toutes proportions.

Selon encore un autre aspect, les compositions de la présente invention telles qu'elles viennent d'être définies peuvent être utilisées seules, en mélange ou en formulation avec un ou plusieurs autres inhibiteurs, destinés à inhiber d'autres types de corrosion rencontrés dans le domaine de l'extraction des hydrocarbures, par exemple la corrosion de fond de conduite (BLC).

Comme exemples d'inhibiteurs de corrosion de fond de voûte, on peut citer des composés aminés qui sont de préférence totalement solubles dans l'eau de telle façon qu'après leur injection, ces produits se trouvent dans la phase aqueuse de fond de conduite. De manière avantageuse, ces inhibiteurs de BLC ne doivent favoriser ni la formation d'émulsion huile-dans-eau, ni la formation de mousse. À titre d'inhibiteurs de corrosion de fond de conduite dits conventionnels, on peut par exemple citer les imidazolines et/ou leurs dérivés et/ou les esters phosphoriques et/ou les thioacides. De tels inhibiteurs de fond de conduite sont en général utilisés à des concentrations variant de 10 ppm à 50 ppm en poids par partie volumique de fluide à traiter.

Parmi les imidazolines préférées, on peut citer celles qui proviennent de la réaction de condensation entre un acide gras (ou un mélange d'acides gras) de formule RCOOH où R est une chaîne alkyle linéaire ou ramifiée comprenant de 12 à 22 atomes de carbone, et une polyalkylène-polyamine dont le nombre de carbone peut varier de 4 à 20, telle que par exemple la DETA (diéthylène-triamine), la TETA (triéthylène-trétramine), la TEPA (tétraéthylène-pentamine) ou la PEHA (pentaéthylène-hexamine) répondant à la formule suivante :

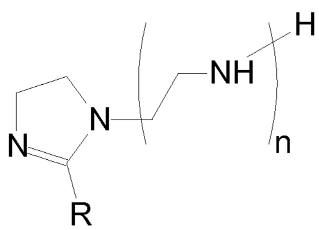

dans laquelle R est tel que défini précédemment et n prend les valeurs 1 à 10, bornes incluses.

Selon un autre aspect, on préfère les imidazolines oxyéthylées ayant de 1 à 20 motifs oxyéthylène.

Les compostions inhibitrices selon la présente invention peuvent être utilisées pures (100% de matières actives inhibitrices de corrosion) ou diluées ou encore en émulsion ou suspension, dans un ou plusieurs solvants, tels qu'ils ont été décrits précédemment.

Les compositions selon la présente invention peuvent en outre comprendre un ou plusieurs autres additifs, charges, et autres, inertes vis-à-vis de l'efficacité des inhibiteurs de corrosion de voûte présents dans lesdites compositions.

De tels additifs sont bien connus de l'homme du métier, et parmi ceux-ci, on peut citer, de manière non limitative, les stabilisants, conservateurs, anti-U.V., ignifugeants, solvants, colorants, et autres.

Les compositions selon l'invention peuvent être préparées par tous moyens connus, et en général par simple mélange des divers composants desdites compositions dans un ordre quelconque. On préfère toutefois mélanger, sous agitation, les Amine(s) 1 et les Amine(s) 2, puis les autres composants éventuels.

Les compositions inhibitrices de corrosion selon la présente invention trouvent ainsi une utilisation tout à fait

avantageuse dans le domaine de la protection contre la corrosion de voûte des conduites d'hydrocarbure dans lesquelles circulent du gaz, du pétrole brut, du gaz et du pétrole brut, en mélange avec une quantité plus ou moins importante d'eau. L'utilisation des compositions selon l'invention et telles qu'elles viennent d'être définies, pour inhiber la corrosion de voûte desdites conduites forme ainsi un autre objet de la présente invention.

Ces compostions peuvent être injectées selon toutes méthodes bien connues de l'homme du métier, en continu, en batch ou en squeeze, de préférence en continu, dans les lignes d'extraction desdits hydrocarbures, dans les lignes d'injection des eaux de production, et de manière générale dans tout fluide aqueux, organique ou hydro-organique mis en oeuvre dans les champs d'extraction d'hydrocarbures. On peut par exemple également injecter ces compositions via le système dit « gas-lift », bien connu de l'homme du métier.

Les compositions inhibitrices sont utilisées, de préférence en traitement en continu, à raison de 100 ppm à 10 000 ppm, exprimés en poids de composition inhibitrice de corrosion pour une partie en volume de fluides corrosifs à traiter.

Selon un autre objet, la présente invention concerne un procédé d'inhibition de la corrosion de la partie supérieure ou voûte d'une conduite de transport de gaz humide et/ou de pétrole brut humide multiphasique, comprenant une phase liquide s'écoulant à la partie inférieure de la conduite et une phase gazeuse s'écoulant à la partie supérieure de la conduite, ledit procédé comprenant au moins une étape d'introduction en continu, en batch ou en squeeze, de préférence en continu, dans ladite conduite d'au moins une composition inhibitrice de corrosion telle que définie précédemment.

Dans le procédé de l'invention, les compositions inhibitrices sont injectées, de préférence en traitement en continu, à raison de 100 ppm à 10 000 ppm, exprimés en poids de composition inhibitrice de corrosion pour une partie en volume de fluides corrosifs à traiter.

Le procédé selon la présente invention, qui est un traitement chimique mettant en oeuvre au moins une composition inhibitrice de la corrosion de voûte telle que définie précédemment, peut comprendre également la mise en oeuvre d'un ou plusieurs traitements physiques, notamment à l'aide de râcles, comme décrit par exemple dans la demande de brevet FR 2 791 695.

Un autre aspect de la présente invention est matérialisé par l'utilisation d'au moins une composition inhibitrice de la corrosion de voûte des conduites d'hydrocarbures utilisées dans l'extraction du gaz et/ou du pétrole, ladite au moins une composition étant telle que définie ci-dessus dans la présente description, avec un ou plusieurs traitements physiques (i.e. mécaniques), telles que par exemple traitements par râcles, et autres.

Les modes de réalisation qui ont été décrits ci-dessus ne sont que des exemples parmi les très nombreuses possibilités que l'homme de l'art saura imaginer. Ils n'ont été donnés que pour aider à comprendre le principe de l'invention qui consiste à utiliser au moins une composition inhibitrice de corrosion de voûte des conduites utilisées pour l'extraction des hydrocarbures, la dite composition étant comme indiqué dans la revendication 1.

Ainsi, les exemples suivants sont destinés à illustrer la présente invention, sans toutefois en limiter la portée, laquelle est définie à l'aide des revendications annexées.

## EXEMPLES

### Méthodes de mesure de l'efficacité anti corrosion :

L'efficacité anti-corrosion est exprimée sous forme de vitesse de corrosion d'un acier au carbone en fonction du temps. La vitesse de corrosion d'un acier est déterminée par la méthode dite LPR (« Linear Polarization Résistance »). En présence de composition inhibitrice de corrosion, plus la vitesse de corrosion est faible plus la composition inhibitrice de corrosion est efficace.

L'efficacité de la composition inhibitrice de corrosion est exprimée en pourcentage d'efficacité, selon la relation suivante :

$$\%\mathrm{Eff}\,(\mathrm{IC}) = \frac{[(\mathrm{Vcor}_1) - (\mathrm{Vcor}_2)]}{(\mathrm{Vcor}_1)} \times 100$$

où : %Eff (IC) représente le pourcentage d'efficacité de la composition inhibitrice de corrosion, Vcor1 représente la vitesse de corrosion en absence de composition inhibitrice de corrosion et Vcor2 représente la vitesse de corrosion en présence de composition inhibitrice de corrosion.

Cependant, il est d'usage courant dans le domaine de l'anti-corrosion de considérer uniquement la vitesse de corrosion résiduelle (c'est-à-dire après traitement ou après injection de la composition inhibitrice de corrosion). Plus cette vitesse de corrosion résiduelle est faible, plus la composition inhibitrice de corrosion est efficace. Une composition inhibitrice de corrosion efficace, à une dose donnée, présente généralement une protection égale à au moins 90%.

**Exemple 1 : Évaluation du pouvoir anti-corrosion**

*a) avec composition inhibitrice « Témoin »*

La corrosion de voûte a été simulée en laboratoire dans des conditions plus sévères que celles rencontrées sur les sites d'extraction des hydrocarbures.

On chauffe de l'eau déminéralisée contenant 500 ppm (volume/volume) d'acide acétique glacial dans un ballon, jusqu'à une température de 85°C. On maintient à cette température dans le ballon.

On fait alors barboter, dans l'eau à 85°C, du gaz carbonique ($CO_2$) à raison de 63 mL/heure. Le gaz carbonique entraîne l'évaporation de l'eau dont le condensat est récupéré puis introduit dans une cellule de mesure de corrosion où il est à nouveau saturé en gaz carbonique par barbotage de $CO_2$ et porté à 60°C.

Cette cellule est également munie d'un système permettant de mesurer la vitesse de corrosion, par mesure de résistance de polarisation, de l'acier en contact avec le condensat. On obtient une courbe « Témoin » (sans inhibiteur), où on observe que la vitesse de corrosion (Vcor) augmente avec le temps. La durée de l'expérience est fixée à 20 heures.

*b) avec composition inhibitrice « Comparative »*

Un test similaire est réalisé avec un inhibiteur de corrosion de voûte comprenant principalement de la MOPA (Amine 1), selon l'enseignement de la demande internationale WO 2006/032774.

On chauffe de l'eau déminéralisée contenant 500 ppm d'acide acétique dans un ballon, à 85°C. On maintient à cette température, puis du $CO_2$ est mis à barboter à une vitesse de 63 mL /heure. Le barbotage de $CO_2$ entraîne l'évaporation de l'eau à 85°C.

Au début de l'évaporation de l'eau par le $CO_2$, on ajoute 500 ppm de la composition Comparative, et on trace la courbe de vitesse de corrosion (Vcor) en fonction du temps à la température de 60°C.

*c) avec compositions inhibitrices selon l'invention*

Des tests similaires à ceux exposés ci-dessus sont réalisés avec les compositions A et C selon l'invention et dont les caractéristiques, ainsi que celles des compositions Témoin, B (non selon l'invention) et Comparative, sont résumées dans le tableau 1 ci-dessous, dans lequel les pourcentages sont exprimés en poids :

**-- Tableau 1 --**

| *Composition* | *Témoin* | *Comparative* | *A* | *B* | *C* |
|---|---|---|---|---|---|
| MOPA | - | 80 | 10 | 10 | 10 |
| Octylamine | - | | 35 | 35 | 35 |
| ATG | - | | 10 | - | 10 |
| MEA | - | | - | 40 | 40 |
| 2-Butoxyéthanol | - | 1,5 | 40 | 10 | - |
| Eau | | 14 | - | - | - |
| Imidazoline 4900 | - | 1,5 | 5 | 5 | 5 |
| Imidazoline 4912 | - | 3 | - | - | - |

La MOPA (méthoxy-3-propylamine) est fournie par la société Arkema, tout comme la MEA (mono-éthanolamine) et l'ATG (acide thioglycolique). L'octylamine (Amine 2) est fournie par Clariant. Les imidazolines 4900 et 4912 sont des inhibiteurs de corrosion de fond de conduite fournies par CECA S.A. Le 2-butoxyéthanol (fourni par Brenntag) est utilisé comme solvant des compositions.

*d) résultats*

Le Tableau 2 ci-dessous présente les résultats de vitesse de corrosion (Vcor) après 20 heures d'expérience, obtenues avec chacune des compositions Témoin, Comparative, B (non selon l'invention) et A et C selon l'invention.

**-- Tableau 2 --**

| *Composition* | *Témoin* | *Comparative* | *A* | *B* | *C* |
|---|---|---|---|---|---|
| Vitesse de corrosion (mm/an) | 1 | 0,70 | 0,15 | 0,38 | 0,09 |
| % de protection | 0 | 30 | 85 | 62 | 91 |

On observe que dans un milieu corrosif (eau condensée contenant 500 ppm d'acide acétique), la vitesse de corrosion « sans inhibiteur » est de 1 mm/an. En présence de 500 ppm d'une Amine 1 (composition Comparative), la vitesse de corrosion résiduelle est de 0,70 mm/an. Le pourcentage de protection est de 30%, alors que l'on considère qu'un inhibiteur de corrosion de voûte est efficace dès lors qu'il apporte une efficacité de protection supérieure à 90% environ.

En présence de 500 ppm de Composition C, comprenant une Amine 1, une Amine 2 et l'acide thioglycolique (ATG), on observe que la vitesse de corrosion résiduelle est de 0,09 mm/an, ce qui correspond à un pourcentage de protection de l'ordre de 91%.

Le tableau 2 permet de comparer l'efficacité des compositions inhibitrices de corrosion de voûte selon l'invention. On observe que chacune des compositions A et C de l'invention, comprenant une Amine 1, une Amine 2 et l'acide thioglycolique (ATG), sont plus efficaces, en termes d'inhibition de corrosion de voûte, que la composition de référence ou la composition B (non selon l'invention).

**Revendications**

**1.** Composition inhibitrice de corrosion de voûte, comprenant :

- de 1% à 30%, de préférence de 5% à 20%, d'au moins une première amine (Amine 1) de pression de vapeur supérieure ou égale à 10 mm de mercure (1,33 kPa), mesurée à 20°C ;
- de 5% à 50%, de préférence de 15% à 45%, d'au moins une deuxième amine (Amine 2) de pression de vapeur supérieure ou égale à 0,1 mm de mercure (≥13,3Pa) et strictement inférieure à 10 mm de mercure (<1,33kPa), mesurée à 20°C ;
- de 5% à 20% d'au moins un additif soufré, choisi parmi les mercapto-acides et les mercapto-alcools ;
- de 0 à 60%, de préférence de 0 à 50% d'au moins une alcanolamine ; et
- éventuellement au moins un solvant, en quantité suffisante pour (q.s.p.) atteindre 100%.

tous les pourcentages (%) étant des pourcentages en poids.

**2.** Composition selon la revendication 1, dans laquelle l'Amine 1 répond à la formule (1) suivante :

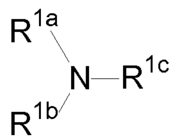

(1)

dans laquelle :

- $R^{1a}$ est choisi parmi les chaînes hydrocarbonées, linéaires ou ramifiées, saturées ou partiellement ou totalement insaturées, comprenant de 1 à 6 atomes de carbone, et éventuellement un ou plusieurs atomes d'oxygène dans la chaîne,
- $R^{1b}$ et $R^{1c}$, identiques ou différents, sont choisis, indépendamment l'un de l'autre, parmi l'atome d'hydrogène et les chaînes hydrocarbonées, linéaires, ramifiées ou cycliques, saturées ou partiellement ou totalement insaturées, comprenant de 1 à 6 atomes de carbone, et éventuellement un ou plusieurs hétéroatomes choisis parmi oxygène, azote et soufre, dans la chaîne.

**3.** Composition selon la revendication 1 ou la revendication 2, dans laquelle l'Amine 1 est choisie parmi la MOPA (méthoxy-3-propylamine) et l'EDIPA (N,N-di-isopropyléthylamine)

**4.** Composition selon l'une quelconque des revendications précédentes, dans laquelle l'Amine 2 répond à la formule (2) suivante :

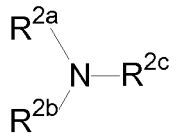

(2)

dans laquelle :

- $R^{2a}$ est choisi parmi les chaînes hydrocarbonées, linéaires, ramifiées ou cycliques, saturées ou partiellement ou totalement insaturées, comprenant de 1 à 12 atomes de carbone, et éventuellement un ou plusieurs hétéroatomes choisis parmi oxygène, azote et soufre, dans la chaîne.
- $R^{2b}$ et $R^{2c}$, identiques ou différents, sont choisis, indépendamment l'un de l'autre, parmi l'atome d'hydrogène et les chaînes hydrocarbonées, linéaires, ramifiées ou cycliques, saturées ou partiellement ou totalement insaturées, comprenant de 1 à 12 atomes de carbone.

**5.** Composition selon l'une quelconque des revendications précédentes, dans laquelle l'Amine 2 est choisie parmi les octylamines, les nonylamines, les décylamines, les undécylamines et les dodécylamines, la n-octylamine étant préférée.

**6.** Composition selon l'une quelconque des revendications précédentes, comprenant en outre un ou plusieurs autres inhibiteurs, destinés à inhiber d'autres types de corrosion rencontrés dans le domaine de l'extraction des hydrocarbures, notamment la corrosion de fond de conduite.

**7.** Utilisation d'une composition selon l'une quelconque des revendications précédentes, pour inhiber la corrosion de voûte des conduites d'hydrocarbure dans lesquelles circulent du gaz, du pétrole brut, du gaz et du pétrole brut, en mélange avec une quantité plus ou moins importante d'eau.

**8.** Utilisation selon la revendication 7, dans laquelle la composition inhibitrice est injectée, de préférence en continu, à raison de 100 ppm à 10 000 ppm, exprimés en poids de composition inhibitrice de corrosion pour une partie en volume de fluides corrosifs à traiter.

**9.** Procédé d'inhibition de la corrosion de voûte d'une conduite de transport de gaz humide et/ou de pétrole brut humide multiphasique, comprenant une phase liquide s'écoulant à la partie inférieure de la conduite et une phase gazeuse s'écoulant à la partie supérieure de la conduite, ledit procédé comprenant au moins une étape d'introduction en continu, en batch ou en squeeze, de préférence en continu, dans ladite conduite d'au moins une composition inhibitrice de corrosion selon l'une quelconque des revendications 1 à 6.

**10.** Procédé selon la revendication 9, dans lequel la composition inhibitrice est injectée, de préférence en continu, à raison de 100 ppm à 10 000 ppm, exprimés en poids de composition inhibitrice de corrosion pour une partie en volume de fluides corrosifs à traiter.

**11.** Procédé selon la revendication 9 ou la revendication 10, comprenant en outre la mise en oeuvre d'un ou plusieurs traitements physiques, notamment à l'aide de râcles.

## Patentansprüche

**1.** Korrosionsinhibitor-Zusammensetzung für den oberen Rohrbereich, umfassend:

- von 1 % bis 30 %, vorzugsweise von 5 % bis 20 %, mindestens eines ersten Amins (Amin 1) mit einem Dampfdruck größer oder gleich 10 mm Quecksilber (1, 33 kPa), gemessen bei 20°C;
- von 5 % bis 50 %, vorzugsweise von 15 % bis 45 %, mindestens eines zweiten Amins (Amin 2) mit einem Dampfdruck größer oder gleich 0,1 mm Quecksilber ($\geq$ 13,3 Pa) und streng kleiner 10 mm Quecksilber (< 1,33 kPa), gemessen bei 20°C;

- von 5 % bis 20 % mindestens eines Schwefel-Additivs, ausgewählt aus Mercaptosäuren und Mercaptoalkoholen;
- von 0 bis 60 %, vorzugsweise von 0 bis 50 %, mindestens eines Alkanolamins; und
- gegebenenfalls mindestens ein Lösungsmittel, in einer ausreichenden Menge, um (q.s.p.) 100 % zu erreichen,

wobei die Prozentsätze (%) Gewichtsprozentsätze sind.

**2.** Zusammensetzung nach Anspruch 1,
wobei das Amin 1 die folgende Formel (1) aufweist:

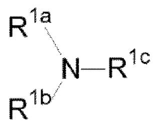

(1)

wobei:

- $R^{1a}$ ausgewählt ist aus linearen oder verzweigten, gesättigten oder teilweise oder vollständig ungesättigten Kohlenwasserstoffketten, umfassend 1 bis 6 Kohlenstoffatome, und gegebenenfalls ein oder mehrere Sauerstoffatome in der Kette,
- $R^{1b}$ und $R^{1c}$, identisch oder verschieden, unabhängig voneinander ausgewählt sind aus einem Wasserstoffatom und linearen, verzweigten oder cyclischen, gesättigten oder teilweise oder vollständig ungesättigten Kohlenwasserstoffketten, umfassend 1 bis 6 Kohlenstoffatome, und gegebenenfalls ein oder mehrere Heteroatome, ausgewählt aus Sauerstoff, Stickstoff und Schwefel, in der Kette.

**3.** Zusammensetzung nach Anspruch 1 oder Anspruch 2, wobei das Amin 1 aus MOPA (Methoxy-3-propylamin) und EDIPA (N,N-Diisopropylethylamin) ausgewählt ist.

**4.** Zusammensetzung nach einem der vorhergehenden Ansprüche, wobei das Amin 2 die folgende Formel (2) aufweist:

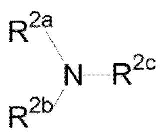

(2)

wobei:

- $R^{2a}$ ausgewählt ist aus linearen, verzweigten oder cyclischen, gesättigten oder teilweise oder vollständig ungesättigten Kohlenwasserstoffketten, umfassend 1 bis 12 Kohlenstoffatome, und gegebenenfalls ein oder mehrere Heteroatome, ausgewählt aus Sauerstoff, Stickstoff und Schwefel, in der Kette,
- $R^{2b}$ und $R^{2c}$, identisch oder verschieden, unabhängig voneinander ausgewählt sind aus einem Wasserstoffatom und linearen, verzweigten oder cyclischen, gesättigten oder teilweise oder vollständig ungesättigten Kohlenwasserstoffketten, umfassend 1 bis 12 Kohlenstoffatome.

**5.** Zusammensetzung nach einem der vorhergehenden Ansprüche, wobei das Amin 2 aus Octylaminen, Nonylaminen, Decylaminen, Undecylaminen und Dodecylaminen ausgewählt ist, wobei n-Octylamin bevorzugt wird.

**6.** Zusammensetzung nach einem der vorhergehenden Ansprüche, ferner umfassend einen oder mehrere andere Inhibitoren, die dazu bestimmt sind, andere Typen von Korrosion zu inhibieren, die auf dem Gebiet der Extraktion von Kohlenwasserstoffen angetroffen werden, insbesondere die Korrosion des unteren Rohrbereichs einer Leitung.

**7.** Verwendung einer Zusammensetzung nach einem der vorhergehenden Ansprüche, zur Inhibition der Korrosion des oberen Rohrbereichs von Kohlenwasserstoff-Leitungen, in denen Gas, Rohöl, Gas und Rohöl, in Mischung mit einer mehr oder weniger großen Menge an Wasser, zirkulieren.

**8.** Verwendung nach Anspruch 7, wobei die Inhibitor-Zusammensetzung vorzugsweise kontinuierlich mit 100 ppm bis

10 000 ppm, ausgedrückt bezogen auf das Gewicht der Korrosionsinhibitor-Zusammensetzung für einen Volumenteil zu behandelnder korrosiver Fluids, injiziert wird.

**9.** Verfahren zur Inhibition der Korrosion des oberen Rohrbereichs einer Transportleitung von feuchtem Gas und/oder mehrphasigem feuchten Rohöl, umfassend eine Flüssigphase, die im unteren Abschnitt der Leitung fließt, und eine Gasphase, die im oberen Abschnitt der Leitung fließt, wobei das Verfahren mindestens einen Schritt des kontinuierlichen, chargenweisen oder pressenden, vorzugsweise kontinuierlichen, Einbringens mindestens einer Korrosionsinhibitor-Zusammensetzung nach einem der Ansprüche 1 bis 6 in die Leitung umfasst.

**10.** Verfahren nach Anspruch 9, wobei die Inhibitor-Zusammensetzung vorzugsweise kontinuierlich mit 100 ppm bis 10 000 ppm, ausgedrückt bezogen auf das Gewicht der Korrosionsinhibitor-Zusammensetzung für einen Volumenteil zu behandelnder korrosiver Fluids, injiziert wird.

**11.** Verfahren nach Anspruch 9 oder Anspruch 10, ferner umfassend die Durchführung einer oder mehrerer physikalischer Behandlungen, insbesondere mit Hilfe von Abstreifern.

## Claims

**1.** Composition for inhibiting top-of-line corrosion, comprising:

- from 1% to 30%, preferably from 5% to 20%, of at least one first amine (Amine 1) with vapour pressure greater than or equal to 10 mmHg (1.33 kPa), measured at 20°C;
- from 5% to 50%, preferably from 15% to 45%, of at least one second amine (Amine 2) with vapour pressure greater than or equal to 0.1 mmHg (≥ 13.3 Pa) and strictly less than 10 mmHg (< 1.33 kPa), measured at 20°C;
- from 5% to 20% of at least one sulphur-containing additive, selected from the mercapto-acids and the mercapto-alcohols;
- from 0 to 60%, preferably from 0 to 50% of at least one alkanolamine; and
- optionally at least one solvent, in a sufficient quantity (q.s.) to reach 100%.

all percentages (%) being percentages by weight.

**2.** Composition according to Claim 1, in which Amine 1 corresponds to the following formula (1):

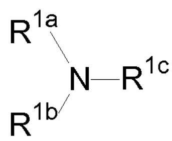

(1)

in which:

- $R^{1a}$ is selected from linear or branched, saturated or partially or fully unsaturated hydrocarbon chains, comprising from 1 to 6 carbon atoms, and optionally one or more oxygen atoms in the chain,
- $R^{1b}$ and $R^{1c}$, which may be identical or different, are selected, independently of one another, from the hydrogen atom and linear, branched or cyclic, saturated or partially or fully unsaturated hydrocarbon chains, comprising from 1 to 6 carbon atoms, and optionally one or more heteroatoms selected from oxygen, nitrogen and sulphur, in the chain.

**3.** Composition according to Claim 1 or Claim 2, in which Amine 1 is selected from MOPA (methoxy-3-propylamine) and EDIPA (N,N-diisopropylethylamine).

**4.** Composition according to any one of the preceding claims, in which Amine 2 corresponds to the following formula (2):

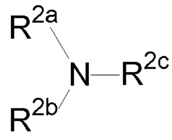

(2)

in which:

- $R^{2a}$ is selected from linear, branched or cyclic, saturated or partially or fully unsaturated hydrocarbon chains, comprising 1 to 12 carbon atoms, and optionally one or more heteroatoms selected from oxygen, nitrogen and sulphur, in the chain.
- $R^{2b}$ and $R^{2c}$, which may be identical or different, are selected, independently of one another, from the hydrogen atom and linear, branched or cyclic, saturated or partially or fully unsaturated hydrocarbon chains, comprising 1 to 12 carbon atoms.

**5.** Composition according to any one of the preceding claims, in which Amine 2 is selected from octylamines, nonylamines, decylamines, undecylamines and dodecylamines, n-octylamine being preferred.

**6.** Composition according to any one of the preceding claims, further comprising one or more other inhibitors, intended for inhibiting other types of corrosion encountered in the area of extraction of hydrocarbons, notably bottom-of-line corrosion.

**7.** Use of a composition according to any one of the preceding claims, for inhibiting top-of-line corrosion of hydrocarbon pipelines in which gas, crude oil, gas and crude oil circulate, mixed with a variable amount of water.

**8.** Use according to Claim 7, in which the inhibitor composition is injected, preferably continuously, at a rate from 100 ppm to 10 000 ppm, expressed as the weight of the corrosion inhibiting composition per part by volume of corrosive fluids to be treated.

**9.** Method of inhibiting top-of-line corrosion of a pipeline conveying wet gas and/or wet multiphase crude oil, comprising a liquid phase flowing along the lower portion of the pipeline and a gas phase flowing along the upper portion of the pipeline, said method comprising at least one step of introduction, in continuous, batch or squeeze mode, preferably continuously, of at least one corrosion inhibiting composition according to any one of claims 1 to 6 into said pipeline.

**10.** Method according to Claim 9, in which the inhibitor composition is injected, preferably continuously, at a rate from 100 ppm to 10 000 ppm, expressed as weight of the corrosion inhibiting composition per part by volume of corrosive fluids to be treated.

**11.** Method according to Claim 9 or Claim 10, further comprising application of one or more physical treatments, notably by means of scrapers.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 4490275 A1
- US 5965785 A1
- US 20050051462 A1
- US 2582138 A1
- FR 2791695
- WO 2006032774 A


### Littérature non-brevet citée dans la description


- **M. SINGER.** Sour Top-of-the-Line Corrosion in the Presence of Acetic Acid. *Corrosion,* 2011, vol. 67, 085003
- **Y.M. GUNALTUN.** Control of Top of line corrosion by chemical treatment. *NACE Corrosion,* 2001
- **R. L. MARTIN.** Inhibition of Vapor Phase Corrosion in gas pipelines. *NACE Corrosion,* 1997
- **N. N. ANDREEV.** Volatile Inhibitors for CO2 Corrosion. *NACE Corrosion,* 1998
- **G. SCHMITT.** Inhibition of the top of line corrosion under stratified flow. *NACE Corrosion,* 2001